**Europäisches Patentamt**

**European Patent Office**

**Office européen des brevets**

(19)

(11) Veröffentlichungsnummer : **0 091 626**
**B1**

(12) **EUROPÄISCHE PATENTSCHRIFT**

(45) Veröffentlichungstag der Patentschrift :
**12.11.86**

(51) Int. Cl.⁴ : **E 04 B   1/346**

(21) Anmeldenummer : **83103265.1**

(22) Anmeldetag : **02.04.83**

(54) Gebäude mit verbesserter Energieausnutzung.

(30) Priorität : **08.04.82 DE 3213182**

(43) Veröffentlichungstag der Anmeldung :
**19.10.83 Patentblatt 83/42**

(45) Bekanntmachung des Hinweises auf die Patenterteilung : **12.11.86 Patentblatt 86/46**

(84) Benannte Vertragsstaaten :
**AT BE CH FR GB IT LI LU NL SE**

(56) Entgegenhaltungen :
**WO-A-81 /035 16**
**DE-A- 1 966 812**
**FR-A- 1 242 847**
**FR-A- 2 082 767**
**FR-A- 2 087 041**
**FR-A- 2 385 861**
**US-A- 3 408 777**

(73) Patentinhaber : **Rinn, Heinrich W.**
**Feldstrasse 20**
**D-6301 Heuchelheim (DE)**

(72) Erfinder : **Rinn, Heinrich W.**
**Feldstrasse 20**
**D-6301 Heuchelheim (DE)**

(74) Vertreter : **Hofmann, Hans Walter, Dr.**
**Hauberisserstrasse 36**
**D-6200 Wiesbaden (DE)**

## Beschreibung

Die Erfindung betrifft ein drehbar bewegliches Gebaeude mit nach einer Seite angeordneten Lichtoeffnungen und mit starker Waermedaemmung der restlichen Seiten, das auf Rollen und einer kreisfoermigen Schiene motorisch drehbar ist.

Wegen der stetigen Abnahme der Vorraete an Primaerenergie haben Massnahmen, die diese Energie einsparen oder besser ausnutzen, eine grosse volkswirtschaftliche Bedeutung.

Da ein sehr grosser Teil der verfuegbaren Energien zu Heizzwecken aufgewendet werden muss, sind Verbesserungen, die hier angewendet werden, besonders wirksam.

Es sind deshalb inzwischen zahlreiche Mittel bekannt geworden, die die Waermedaemmung verbessern, sodass bereits merkbare Einsparungen erzielt werden konnten.

Die bekannten Massnahmen greifen weit ueberwiegend am Aufbau der Gebaeude an.

Die hierzu erforderlichen Ueberlegungen betreffen deshalb nur den einen Teil der Ursachen des Energieabflusses. Der andere Teil, das aeussere Klima, ist in solche Ueberlegungen nicht einbezogen.

Das liegt daran, dass die Versuche, das Wetter in einer besonders vorteilhaften Weise zu gestalten, bisher nicht erfolgreich gewesen sind und dass es ausserdem schwierig sein wuerde, dies fuer alle Beteiligten gleichmaessig und ohne Stoerung der sehr fein abgestimmten natuerlichen Gleichgewichte zu erreichen.

Es ist bereits bei einer Anordnung nach FR-PS 1242847 versucht worden, die mikroklimatischen Bedingungen dadurch zu verbessern, dass die Gebaeude drehbar gemacht wurden. Die mikroklimatische Verbesserung entsteht dabei durch Einstellen des Gebaeudes zur Sonne hin.

Diese Anordnung ist nach PCT/FR81/00069 (WO81/03516) noch dadurch verbessert worden, dass Sonnenkollektoren vorgesehen sind und dass die Drehung des Gebaeudes tageszeitlich programmiert ist.

Sollen jedoch die Sonnenkollektoren, beispielsweise aufgrund kommunaler Bauauflagen bei Fachwerkhaeusern hinter der Bruestung von flachen Daechern verschwinden, dann reicht die feste Programmierung der Drehung nicht aus, vielmehr ist ein genauerer Ablauf der Drehung relativ zur Sonne erforderlich.

Diese Verbesserung hat sich die Erfindung deshalb zur Aufgabe gemacht.

Sie loest diese Aufgabe dadurch, dass bei Fachwerkwohnhaeusern Sonnenkollektoren hinter der Dachbruestung eines flachen Daches verdeckt am Gebaeude angeordnet sind, und dass durch eine selbsttaetige, auf die Sonne gerichtete Nachlaufsteuerung eine Drehung des Gebaeudes entsprechend dem Sonnenlauf erfolgt.

In der Zeichnung, anhand derer die Erfindung erlaeutert ist, sind weitere Einzelheiten dargestellt. Es zeigen :

Figur 1 : Ein drehbares Gebauede im Grundriss, halbrund.

Figur 2 : Ein drehbares Gebaeude mit rechteckigem Grundriss.

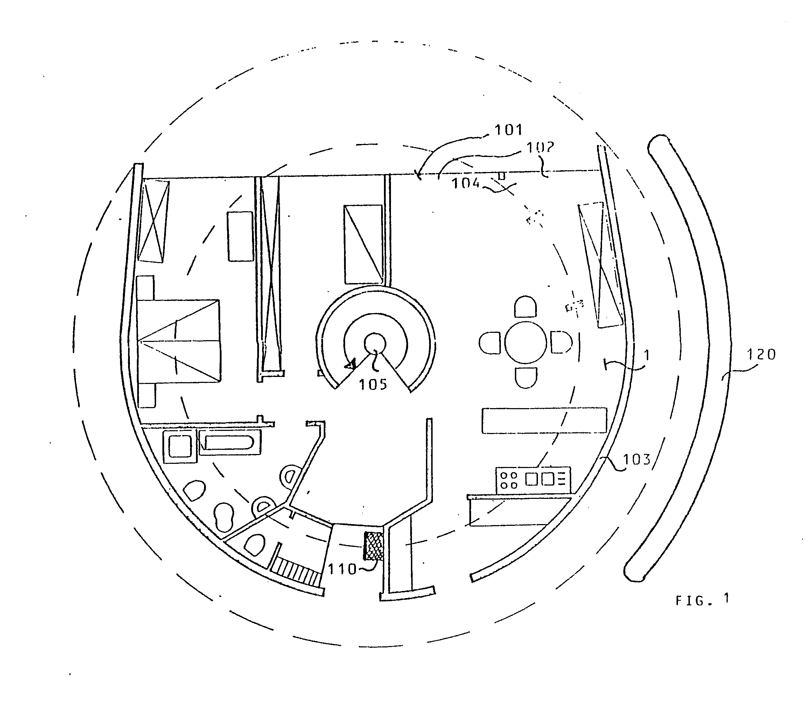

In Fig. 1 ist das Gebaeude 1 an seiner Vorderseite 101 mit grossen Fenstern 102 versehen, die sich moeglichst ueber die gesamte Gebaeudeflaeche erstrecken sollen. Diese Fenster uebernehmen den groessten Teil der Belichtung des Gebaeudes. Die Waende 103 sind mit Waermedaemmstoffen versehen und weisen nach Moeglichkeit nur wenige Tuer- und Fensteroeffnungen auf.

Zentrisch werden Versorgungs- und Entsorgungsleitungen 105, die im einzelnen bekannt und nicht naeher dargestellt sind, mit dem Fundament verbunden.

Bei beliebiger Verdrehbarkeit muessen diese Anschluesse drehdicht sein.

Sollen Drehwinkel unter 360 Grad ausreichen, genuegen Anschlaege fuer den Drehkranz des Gebaeudes und flexibel ausgebildete Leitungen 105.

Ein Antrieb 110, der motorisch oder von Hand bedienbar ist, uebernimmt die Verdrehung des Gebaeudes gegen seine Unterlage.

Das Gebaeude kann mit einem oder mehreren Stockwerken versehen sein.

Wird ein Schutzwall 120, etwa eine Holzpalisade oder aehnliches vorgesehen, laesst sich durch Eindrehen hinter diesen Wall nicht nur ein Wetterschutz sondern auch eine nur schwer ueberwindbare Diebstahls- und Schallsperre erreichen.

Auch akustische Daemmungen lassen sich in dieser Art erreichen, hinter die das Gebaeude, beispielsweise bei Auftreten von Verkehrsspitzen, verfahren werden kann.

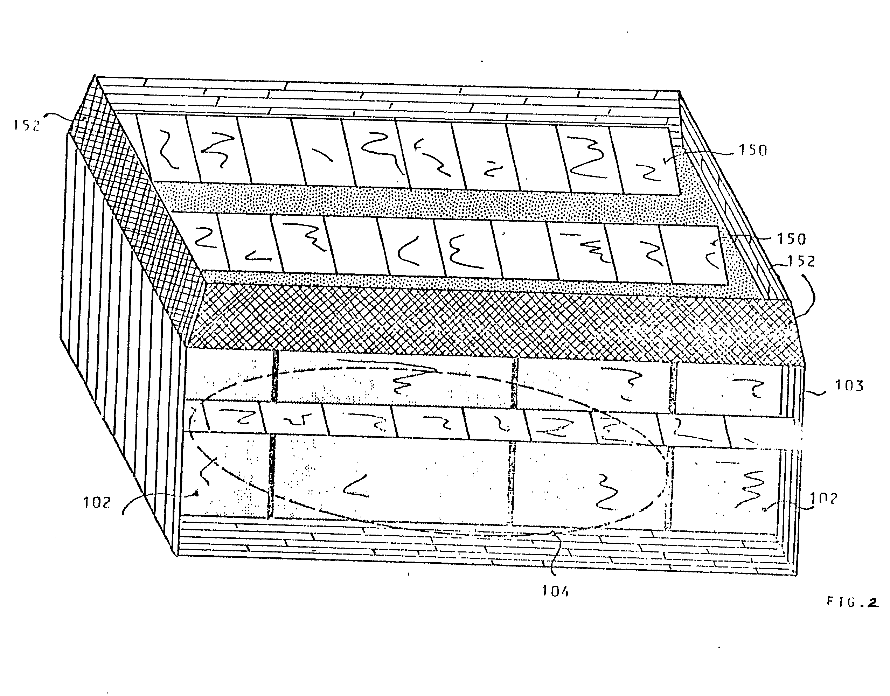

Das Gebaeude laesst sich nicht nur als rundes oder halbrundes Gebaeude sondern nach Fig. 2 auch mit rechteckigem Grundriss errichten.

Ist ein Flachdach vorgesehen, dessen Dachseiten 152 eine der ueblichen Schindeleindeckungen aufweisen, kann deren versenkte Innenflaeche mit Sonnenkollektoren 150 bedeckt sein.

Da diese Kollektorflaechen der Sonne nachgefuehrt werden, koennen sie nunmehr unter die Dachseiten versenkt werden, sodass die ueblichen Schwierigkeiten bei der aesthetischen Anpassung an die Gebaeudeumgebung verringert sind.

Die Kollektoren koennen beispielsweise geneigt angeordnet sein, ohne dass der Baukoerper dadurch aesthetisch gestoert wird.

## Patentansprüche

1. Drehbar bewegliches Gebaeude mit nach einer Seite angeordneten Lichtoeffnungen und mit starker Waermedaemmung der restlichen Seiten, das auf Rollen und einer kreisfoermigen Schiene motorisch drehbar ist, dadurch gekennzeichnet, dass Sonnenkollektoren hinter der Dachbruestung des flachen Daches eines Fachwerkwohnhauses verdeckt am Gebaeude angeordnet sind und dass durch eine selbsttaetige, auf die Sonne gerichtete Nachlaufsteuerung eine Drehung des Gebaeudes entsprechend dem Sonnenlauf erfolgt.

2. Gebaeude nach Anspruch 1, dadurch gekennzeichnet, dass die Drehung mit einer Phasenverschiebung gegen die Sonne erfolgt.

## Claims

1. Rotatably movable building having light apertures arranged on one side and having efficient heat insulation on the remaining sides, said building being rotatable by motor power on rollers and on a circular rail, characterized in that solar collectors are arranged concealed on the building behind the roof parapet of the flat roof of a latticeframed residential building, and that the building is rotated to follow the sun by an automatic tracking system fixed on the sun.

2. Building according to Claim 1, characterized in that the rotation takes place with a phase shift in relation to the sun.

## Revendications

1. Bâtiment mobile pivotant sur un axe de révolution, pourvu sur un côté d'ouvertures d'éclairage et à forte isolation thermique sur les autres côtés, reposant sur galets eux-mêmes guidés par un rail circulaire, et dont la révolution est entraînée par moteur, caractérisé par le fait que des collecteurs solaires sont disposés cachés derrière l'allège du toit plat d'une maison d'habitation à colombages et qu'un mouvement de révolution du bâtiment, en fonction de la course du soleil, est commandé par un dispositif de poursuite automatique du soleil.

2. Bâtiment selon la revendication 1, caractérisé par le fait que le mouvement de révolution est accompli avec un certain déphasage par rapport au soleil.

FIG. 1

FIG.2